# EUROPÄISCHE PATENTSCHRIFT

(11) **EP 0 479 172 B1**
(45) Veröffentlichungstag und Bekanntmachung des Hinweises auf die Patenterteilung: **19.07.1995**
(21) Anmeldenummer: 91116614.8
(22) Anmeldetag: 28.09.1991
(51) Int. Cl.: F16L 21/035, F16L 17/10

(54) **Steckmuffenverbindung**
Insert sleeve connection
Raccord avec manchon à garniture

(30) Priorität: 28.09.1990 DE 9013603 U
(43) Veröffentlichungstag der Anmeldung: 08.04.1992
(73) Patentinhaber: PHOENIX AKTIENGESELLSCHAFT, 21079 Hamburg (DE); ALBERT STEINHOFF GmbH, D-48301 Nottuln (DE)
(72) Erfinder: Dreier, Bernhard, D-21629 Neu Wulmstorf (DE); Grabe, Werner, Dr.-Ing., D-21423 Winsen-Luhdorf (DE); Steinhoff jun., Albert, Dipl.-Ing., D-48301 Nottuln (DE)

(56) Entgegenhaltungen:
- EP-A- 0 340 385
- DE-A- 3 414 180
- DE-A- 3 828 971
- FR-A- 2 153 612

## Beschreibung

Die Erfindung betrifft eine Steckmuffenverbindung, insbesondere für den Einsatz im Kanalbau, bestehend aus einer Muffe aus erhärtetem Material, und zwar aus Beton, Stahlbeton oder Kunstharz;
einem Spitzende eines Rohres als Steckteil und einem Dichtring aus elastomerem Werkstoff, der einen inneren Hohlraum aufweist, wobei durch Einpressen von Luft oder eines plastischen oder dauerelastischen Mediums durch wenigstens eine Leitung in diesen Hohlraum bei gleichzeitiger Verformung des Dichtringes der verbleibende Restspalt zwischen Muffe und Spitzende überbrückbar und somit abdichtbar ist.

Muffenrohre, insbesondere aus Beton oder Stahlbeton, finden zur Ableitung von Abwasser und Regenwasser verbreitet Anwendung. Zur Abdichtung des Spaltes zwischen der Muffe und dem Spitzende sind Dichtringe aus elastomerem Werkstoff, d.h. aus Gummi oder gummiähnlichem Kunststoff vorgesehen, beispielsweise unter Verwendung von Roll- und Gleitringen (DE-B-12 99 183, DE-C-34 06 505).

In der jüngeren Entwicklung wird es bevorzugt, den Dichtring im Muffengrund fest verankert anzuordnen (integrierte Steckmuffendichtung). Eine solche Abdichtung hat den Vorteil, daß der Dichtring bereits bei der Rohrherstellung in seine Position gebracht wird und später nur die entsprechenden Teile (Spitzende, Muffe) ineinander geschoben werden müssen. Hierzu ist es jedoch erforderlich, daß der Dichtring schon während der Rohrherstellung in eine geeignete Position fest eingebracht wird, damit während des Betonierens und beim Ausschalen eine Verlagerung nicht mehr eintreten kann.

In den meisten Fällen war hierzu bisher der Einsatz eines Hilfsringes aus Kunststoff (z.B. Styrolkunststoff) oder aus Gummi als Verschalungselement erforderlich, der zudem noch als Schutzring beim Transport und Lagerung des Muffenrohres Verwendung fand. Die Bedeutung dieses Hilfsringes bei der Herstellung eines Muffenrohres wird durch zahlreiche Publikationen untermauert, wobei die folgenden Literaturstellen lediglich eine beschränkte Auswahl des gesamten diesbezüglichen Standes der Technik wiedergeben:
DE-C-21 40 546, DE-A-22 52 089, DE-C-22 66 044, DE-C-29 35 392, DE-A-31 36 183, DE-A-34 22 483, DE-C-35 07 909, DE-A-36 17 466, DE-A-36 24 831, DE-A-36 38 547, DE-A-38 08 450, DE-U-84 25 094, DE-U-90 04 616.

In der DE-C-33 45 569 und EP-A-0 449 082 wird nun eine Steckmuffendichtung beschrieben, die bei der Herstellung der Rohrmuffe ohne Einsatz eines zusätzlichen Hilfsringes einbetonierbar ist (einteilige Steckmuffendichtung).

Bei Spalten mit hohen Toleranzen sind Rollringe, Gleitringe oder verankerte Dichtringe zum Abdichten von Steckmuffenverbindungen jedoch nur noch begrenzt einsatzfähig, da bei hohen Verpressungen (> 65 %) Materialzerstörungen auftreten. Darüber hinaus sind zu hohe Montagekräfte erforderlich. Aus diesem Grunde ist bereits vorgeschlagen worden, anstelle der oben vorgestellten Dichtungssysteme aktivierbare Dichtringe einzusetzen (DE-A-34 14 180, EP-A-0 340 385). So sind aus der DE-A-34 14 180 Dichtringe bekannt, die einen inneren Hohlraum enthalten, der mit einem Druckverteilungsmedium gefüllt (Variante A) bzw. befüllbar (Variante B) ist. Dabei befindet sich das Druckverteilungsmedium gemäß Variante A innerhalb eines abgeschlossenen Dichtungssystems (d.h. ohne Leitungsanschluß). Ein beispielweise mit diesem Medium gefüllter Rollring ändert bei der Verpressung seine Querschnittsgestalt (von kreisförmiger zu ovalförmiger Gestalt). Gemäß Variante B dagegen ist der Hohlraum mit einer Leitung verbunden, die innerhalb des Spaltes zwischen Muffe und Spitzende verläuft. Beide Varianten haben sich bislang jedoch nicht durchsetzen können, so daß man immer wieder auf die eingangs erwähnten klassischen Abdichtungssysteme zurückgreifen mußte, was die Vielzahl der diesbezüglich publizierten Entwicklungsarbeiten veranschaulicht.

Der Erfindung liegt nun die überraschende Erkenntnis zugrunde, daß erst bei einer Steckmuffenverbindung mit einem Aufbau gemäß der kennzeichnenden Merkmale des Anspruchs 1 oder 2 der Einsatz aktivierbarer Dichtringe sinnvoll ist.

Die Erfindung wird nun anhand zweier Ausführungsbeispiele unter Bezugnahme auf schematische Zeichnungen näher erläutert. Es zeigen:
- Fig. 1: eine Steckmuffenverbindung ohne Vordichtung;
- Fig. 2: eine Steckmuffenverbindung mit Vordichtung.

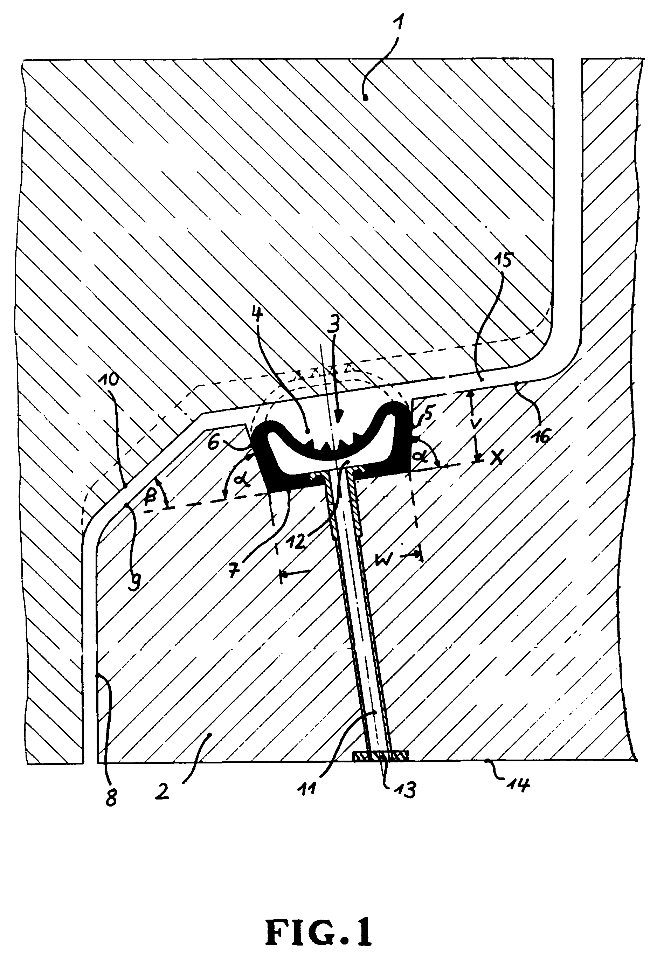

Nach Fig. 1 besteht die Steckmuffenverbindung aus einer Muffe (1), einem Spitzende (2) und einem aktivierbaren Dichtring (3) aus elastomerem Werkstoff (Gummi oder gummiähnlichem Kunststoff). Das Spitzende weist eine Nut (4; Nuttiefe v, Nutbreite w) mit Flanken (5, 6) auf, wobei der Flankenwinkel α zweckmäßigerweise 60° bis 90° beträgt (Bezugslinie X als Verlängerung des Nutengrundes 7). Die Flanken sind hier geneigt ( α ca. 80°). Das Spitzende (2) ist in dem Bereich zwischen seiner Stirnfläche (8) und dem aktivierbaren Dichtring (3) mit einer geneigten Flanke (9) versehen, wobei die gegenüberliegende Muffenflanke (10) winkelgleich verläuft. In diesem Konusbereich von Spitzende und Muffe beträgt der Flankenwinkel β zweckmäßigerweise 20° bis 45° (Bezugslinie X), wobei hier ein Flankenwinkel von ca. 35° auftritt. Auf diese Weise ist eine leichte Zentrierung des Spitzendes möglich, was wiederum zu einer Erhöhung der Dichtwirkung beiträgt.

Die Leitung (11), die in der Nutmitte an den Hohlraum (12) angeschlossen ist, weist einen verschließbaren Teil (Ventil 13) auf, wobei das Ventil hier flächenbündig mit dem Rohrinneren (14) ist. Durch Einpressen von Luft oder eines plastischen oder dauerelastischen Mediums durch diese Leitung in den Hohlraum (12) wird bei gleichzeitiger Verformung des Dichtringes (3; gestrichelte Linienführung) der verbleibende Restspalt (15) zwischen Muffe und Spitzende überbrückbar und somit abdichtbar.

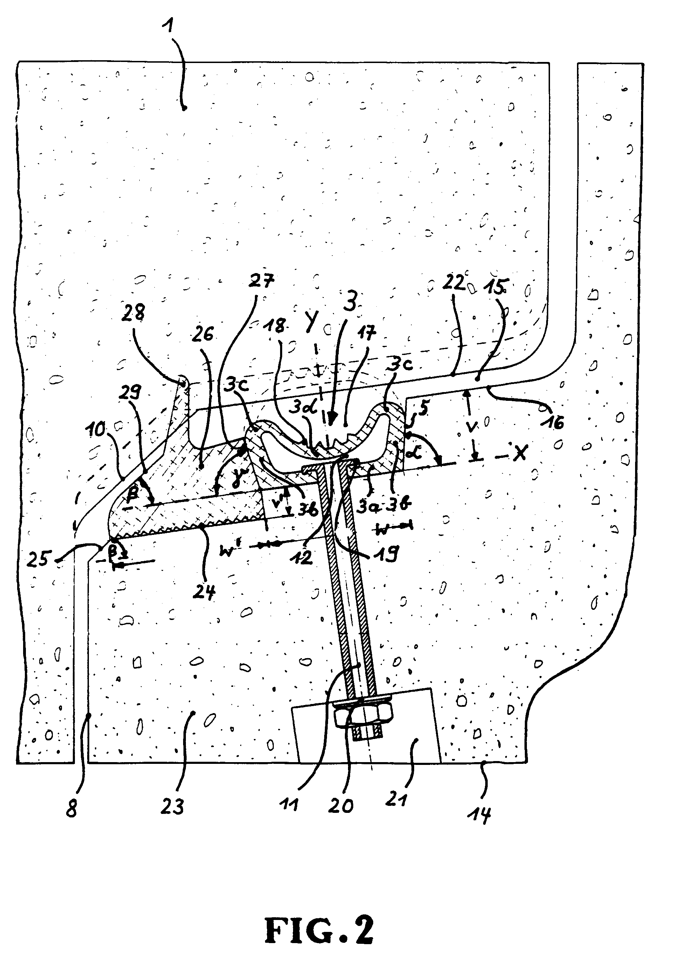

Nach Fig. 2 besitzt die Steckmuffenverbindung den gleichen aktivierbaren Dichtring (3), wobei nun die einzelnen Dichtungsteile näher erläutert werden. Das spiegelsymmetrische Dichtungsprofil (Spiegelebene Y) besteht aus einem Basisteil (3a), zwei die Nutflanken tangierenden Seitenteilen (3b) und einem verformbaren Frontteil, wobei im nichtaktivierten Zustand dieser Frontteil derart gestaltet ist, daß die beiden bogenförmigen Randteile (3c) höhengleich (d.h. maximale Dichthöhe ≙ Nuttiefe v) mit der Spitzendfläche (16) sind, während sich der bogenförmige Innenteil (3d) innerhalb der Nut (17) befindet. Die durchschnittliche Wandstärke der Dichtringteile (3a, 3b, 3c, 3d) beträgt 2 bis 5 mm. Der Innenteil (3d) selbst ist außenseitig mit zahnförmigen (ggf. schwalbenschwanzförmigen) Vorsprüngen (18) versehen und ist im nichtaktivierten Zustand etwa mit der halben Nuttiefe v innerhalb der Nut (17) angeordnet. Dadurch daß die Randteile (3c) des Dichtringes im nichtaktivierten Zustand höhengleich mit der Spitzendfläche (16) sind, erfolgt kein mechanischer Angriff auf den Elastomerkörper beim Zusammenfügen von Muffe und Spitzende des Rohres.

Die Leitung (11) ist mittels eines Flansches (19), der innenseitig am Dichtring-Basisteil (3a) anliegt, an den Hohlraum (12) angeschlossen. Der Flansch selbst trägt zu einer wirksamen Verankerung des aktivierbaren Dichtringes (3) bei. Der verschließbare Teil (Ventil 20) der Leitung befindet sich hier in einer Rohrinnenbohrung (21).

Im Gegensatz zu dem Ausführungsbeispiel gemäß Fig. 1 besitzt das Spitzende (23) zwei Nuten (17, 24), die stufenförmig ineinander übergehen. Die Tiefe v' der Nut (24) ist ≦ der halben Tiefe v der Nut (17), während die Nutbreite w' etwa gleich der Nutbreite w ist. Durch das Vorhandensein der zusätzlichen Nut (24) ist im Konusbereich die geneigte Flanke (25) des Spitzendes (23) verkürzt. In dieser Nut (24) befindet sich ein Vordichtring (26) in Form eines Elastomer-Vollkörpers, u.z. bei gleichzeitigem Kontakt mit dem Dichtring-Seitenteil (3b), wobei die Kontaktfläche (27) zwischen den beiden Elastomerkörpern geneigt ist. Der Winkel γ (Bezuglinie X) dieser Kontaktfläche ist etwa gleich dem Flankenwinkel α (hier ca. 80°) der Nut (17). Der Vordichtring (26) selbst besitzt eine Dichtlippe (28), die in Richtung des aktivierbaren Dichtringes (3) geneigt ist. Die sich im Konusbereich von Spitzende und Muffe befindende Außenfläche (29) des Vordichtringes hat den gleichen Neigungswinkel (Bezugslinie X) wie die Spitzendflanke (25) bzw. die gegenüberliegende Muffenfläche (10), wobei der Winkel β hier wiederum ca. 35° beträgt.

Die Scherbelastung auf die Steckmuffenverbindung wird bei Überlastung des aktivierten Dichtringes (3; gestrichelte Linienführung) durch Kontakt über die Spitzendfläche (16) und Muffenfläche (22) sowie durch den Vordichtring (26) aufgenommen.

Der aktivierbare Dichtring (3) und der Vordichtring (26) bestehen aus Ethylen-Propylen-Dien-Mischpolymerisat (EPDM) oder einem Verschnitt aus Styrol-Butadien-Kautschuk (SBR) und Naturkautschuk (NR). Der Vordichtring (26) weist eine Härte in Shore A von 35° bis 65° auf.

Der aktivierbare Dichtring (3) besitzt zweckmäßigerweise in einem bestimmten Ringabstand (insbesondere in halbem Ringumfang) zwei Leitungen, wobei sich eine Leitung im Hochpunkt des Ringes befindet. Dabei wird von unten befüllt, während oben die im aktivierbaren Ring eingeschlossene Luft entweicht. Sobald die Luft entwichen ist, wird das obere Ventil geschlossen, und der Druck weiter erhöht (z.B. bis 1 bar).

## Patentansprüche

1. Steckmuffenverbindung, insbesondere für den Einsatz im Kanalbau, bestehend aus
- einer Muffe (1) aus erhärtetem Material, und zwar aus Beton, Stahlbeton oder Kunstharz;
- einem Spitzende (2) eines Rohres als Steckteil und
- einem Dichtring (3) aus elastomerem Werkstoff, der einen inneren Hohlraum (12) aufweist, wobei der Dichtring (3) durch Einpressen von Luft oder eines plastischen oder dauerelastischen Mediums durch wenigstens eine verschließbare Leitung (11) in diesen Hohlraum von einem nichtaktivierten in einen aktivierten Zustand überführbar ist und bei der dabei auftretenden Verformung des Dichtringes ein verbleibender Restspalt (15) zwischen Muffe und Spitzende überbrückbar und somit abdichtbar ist;
wobei
- das Spitzende (2) in dem Bereich zwischen seiner Stirnfläche (8) und dem aktivierbaren Dichtring (3) eine geneigte Flanke (9) aufweist und die gegenüberliegende Muffenflanke (10) winkelgleich verläuft; wobei ferner
- das Spitzende (2) eine mit Flanken (5, 6) versehene Nut (4) mit der Nuttiefe v und Nutbreite w aufweist, in der sich der Dichtring (3) befindet, bestehend aus einem der Nutbreite w entsprechenden Basisteil (3a), zwei die Nutflanken (5, 6) tangierenden Seitenteilen (3b) und einem verformbaren Frontteil, der im nichtaktivierten Zustand beidseits mit jeweils einem bogenförmigen Randteil (3c) in die angrenzenden Seitenteile (3b) übergeht, wobei die maximale Höhe der Randteile (3c) der Nuttiefe v entspricht und damit höhengleich mit der Fläche (16) des Spitzendes (2) ist, während sich der Frontteil bogenförmig bis etwa zur halben Nuttiefe v in die Nut (4) erstreckt; und wobei
- die innerhalb des Spitzendes (2) verlaufende Leitung (11) mittels einer Öffnung im Basisteil (3a) des Dichtringes an den Hohlraum (12) angeschlossen ist, wobei sich der verschließbare Teil (13) der Leitung im Bereich des Rohrinneren (14) befindet.

2. Steckmuffenverbindung, insbesondere für den Einsatz im Kanalbau, bestehend aus
- einer Muffe (1) aus erhärtetem Material, und zwar aus Beton, Stahlbeton oder Kunstharz;
- einem Spitzende (23) eines Rohres als Steckteil und
- einem Dichtring (3) aus elastomerem Werkstoff, der einen inneren Hohlraum (12) aufweist, wobei der Dichtring (3) durch Einpressen von Luft oder eines plastischen oder dauerelastischen Mediums durch wenigstens eine verschließbare Leitung (11) in diesen Hohlraum von einem nichtaktivierten in einen aktivierten Zustand überführbar ist und bei der dabei auftretenden Verformung des Dichtringes ein verbleibender Restspalt (15) zwischen Muffe und Spitzende überbrückbar und somit abdichtbar ist;
wobei
- das Spitzende (23) in dem Bereich zwischen seiner Stirnfläche (8) und dem aktivierbaren Dichtring (3) eine geneigte Flanke (25) aufweist und die gegenüberliegende Muffenflanke (10) winkelgleich verläuft; wobei ferner
- das Spitzende (23) eine mit einer Flanke (5) versehene Nut (17) mit der Nuttiefe v und Nutbreite w aufweist, in der sich der Dichtring (3) befindet, bestehend aus einem der Nutbreite w entsprechenden Basisteil (3a), zwei Seitenteilen (3b), wobei ein Seitenteil die Nutflanke (5) tangiert, und einem verformbaren Frontteil, der im nichtaktivierten Zustand beidseits mit jeweils einem bogenförmigen Randteil (3c) in die angrenzenden Seitenteile (3b) übergeht, wobei die maximale Höhe der Randteile (3c) der Nuttiefe v entspricht und damit höhengleich mit der Fläche (16) des Spitzende (23) ist, während sich der Frontteil bogenförmig bis etwa zur halben Nuttiefe v in die Nut (17) erstreckt; wobei
- sich zwischen dem aktivierbaren Dichtring (3) und der Stirnfläche (8) des Spitzende ein Vordichtring (26) in Form eines Elastomer-Vollkörpers befindet, wobei der Vordichtring in einer Nut (24) mit der Nuttiefe v' und Nutbreite w', die stufenförmig in die Nut (17) übergeht, einsitzt, und zwar bei gleichzeitigem Kontakt mit dem anderen Dichtrings-Seitenteil (3b), wobei die sich im Konusbereich von Spitzende und Muffe befindende Außenfläche (29) des Vordichtringes geneigt ist, wobei wiederum die Außenfläche (29) den gleichen Neigungswinkel wie die Spitzendeflanke (25) bzw. Muffenflanke (10) aufweist; und wobei
- die innerhalb des Spitzendes (23) verlaufende Leitung (11) mittels einer Öffnung im Basisteil (3a) des Dichtringes an den Hohlraum (12) angeschlossen ist, wobei sich der verschließbare Teil (20) der Leitung im Bereich des Rohrinneren (14) befindet.

3. Steckmuffenverbindung nach Anspruch 1 oder 2, dadurch gekennzeichnet, daß der Dichtring-Innenteil (3d) außenseitig zahnförmige oder schwalbenschwanzartige Vorsprünge (18) aufweist.

4. Steckmuffenverbindung nach Anspruch 2 oder 3, dadurch gekennzeichnet, daß der Vordichtring (26) eine Dichtlippe (28) besitzt, die in Richtung des aktivierbaren Dichtringes (3) geneigt ist.

5. Steckmuffenverbindung nach einem der Ansprüche 2 bis 4, dadurch gekennzeichnet, daß der Vordichtring (26) eine Härte in Shore A von 35° bis 65° aufweist.

6. Steckmuffenverbindung nach einem der Ansprüche 2 bis 5, dadurch gekennnzeichnet, daß der Winkel γ der Kontaktfläche (27) zwischen den beiden Elastomerkörpern etwa gleich dem Flankenwinkel α der Nut (4, 17) ist.

7. Steckmuffenverbindung nach einem der Ansprüche 2 bis 6, dadurch gekennzeichnet, daß die Nuttiefe v' ≦ der halben Nuttiefe v ist.

8. Steckmuffenverbindung nach einem der Ansprüche 2 bis 7, dadurch gekennzeichnet, daß die Nutbreite w' etwa gleich der Nutbreite w ist.

9. Steckmuffenverbindung nach einem der Ansprüche 1 bis 8, dadurch gekennzeichnet, daß der Flankenwinkel α 60° bis 90° beträgt.

10. Steckmuffenverbindung nach einem der Ansprüche 1 bis 9, dadurch gekennzeichnet, daß im Konusbereich von Spitzende (2, 23) und Muffe (1) der Winkel β der Flanken (9, 10, 25) und der Außenfläche (29) des Vordichtringes 20° bis 45° beträgt

11. Steckmuffenverbindung nach einem der Ansprüche 1 bis 10, dadurch gekennzeichnet, daß die durchschnittliche Wandstärke der Dichtringteile (3a, 3b, 3c, 3d) 2 bis 5 mm beträgt.

12. Steckmuffenverbindung nach einem der Ansprüche 1 bis 11, dadurch gekennzeichnet, daß der aktivierbare Dichtring (3) und der Vordichtring (27) aus Ethylen-Propylen-Dien-Mischpolymerisat (EPDM) oder einem Verschnitt aus Styrol-Butadien-Kautschuk (SBR) und Naturkautschuk (NR) besteht.

13. Steckmuffenverbindung nach einem der Ansprüche 1 bis 12, dadurch gekennzeichnet, daß die Leitung (11) in der Nutmitte an den Hohlraum (12) angeschlossen ist.

14. Steckmuffenverbindung nach einem der Ansprüche 1 bis 13, dadurch gekennzeichnet, daß der Leitungsanschluß mittels eines Flansches (19), der innenseitig am Dichtring-Basisteil (3a) anliegt, erfolgt.

15. Steckmuffenverbindung nach einem der Ansprüche 1 bis 14, dadurch gekennzeichnet, daß der verschließbare Teil (13) der Leitung flächenbündig mit dem Rohrinneren (14) ist.

16. Steckmuffenverbindung nach einem der Ansprüche 1 bis 14, dadurch gekennzeichnet, daß sich der verschließbare Teil (20) der Leitung in einer Rohrinnenbohrung (21) befindet.

17. Steckmuffenverbindung nach einem der Ansprüche 1 bis 16, dadurch gekennzeichnet, daß der aktivierbare Dichtring (3) zwei Leitungen besitzt, die in einem bestimmten Ringabstand (insbesondere in halbem Ringumfang) angeordnet sind, wobei sich eine Leitung im Hochpunkt des Ringes befindet.

## Claims

1. A plug-and-socket connection especially for use in building conduits, consisting of:
- a socket (1) of hardened material, that is, of concrete, reinforced concrete, or synthetic resin;
- a pointed end (2) of a pipe as the plug-in part; and
- a sealing ring (3) which is of elastomeric material and exhibits an inner cavity (12) so that by forcing in air or a plastic or permanently elastic medium through at least one closable duct (11) into this cavity the sealing ring (3) may be transferred frog a non-activated state into an activated state, and that during the deformation of the sealing ring thereby occurring a residual gap (15) remaining between the socket and the pointed end may be bridged over and hence sealed;
whilst
- the pointed end (2) in the region between its endface (8) and the activatable sealing ring (3) exhibits a sloping flank (9) and the flank (10) of the socket lying opposite runs at the same angle;
and further
- the pointed end (2) exhibits a groove (4) provided with flanks (5, 6) and of groove depth *v* and groove width *w*, in which lies the sealing ring (3) consisting of a base part (3a) which corresponds with the width *w* of the groove, two side parts (3b) which make a tangent to the flanks (5, 6) of the groove and a deformable front part which in the non-activated state continues at each side by an arcuate edge part (3c) into the adjoining side parts (3b), so that the maximum height of the edge parts (3c) corresponds with the depth *v* of the groove and thereby is level with the face (16) on the pointed end (2) whilst the front part extends in the shape of a bow down into the groove (4) to about half the depth *v* of the latter;
and again
- the duct (11) running inside the pointed end (2) is connected by means of an opening in the base part (3a) of the sealing ring to the cavity (12), with the closable part (13) of the duct lying in the region of the inside (14) of the pipe.

2. A plug-and-socket connection especially for use in building conduits, consisting of:
- a socket (1) of hardened material, that is, of concrete, reinforced concrete, or synthetic resin;
- a pointed end (23) of a pipe as the plug-in part; and
- a sealing ring (3) which is of elastomeric material and exhibits an inner cavity (12) so that by forcing in air or a plastic or permanently elastic medium through at least one closable duct (11) into this cavity the sealing ring (3) may be transferred from a non-activated state into an activated state, and that during the deformation of the sealing ring thereby occurring a residual gap (15) remaining between the socket and the pointed end may be bridged over and hence sealed;
whilst
- the pointed end (23) in the region between its endface (8) and the activatable sealing ring (3) exhibits a sloping flank (25) and the flank (10) of the socket lying opposite runs at the same angle;
and further
- the pointed end (23) exhibits a groove (17) provided with a flank (5) and of groove depth *v* and groove width *w*, in which lies the sealing ring (3) consisting of a base part (3a) which corresponds with the width *w* of the groove, and two side parts (3b), one of the side parts making a tangent to the flank (5) of the groove, and a deformable front part which in the non-activated state continues at each side by an arcuate edge part (3c) into the adjoining side parts (3b), so that the maximum height of the edge parts (3c) corresponds with the depth *v* of the groove and thereby is level with the face (16) on the pointed end (23), whilst the front part extends in the shape of a bow down into the groove (17) to about half the depth *v* of the latter;
- between the activatable sealing ring (3) and the endface (8) of the pointed end lies a presealing ring (26) in the form of a solid elastomeric body, the presealing ring being seated in a groove (24) of groove depth *v*' and groove width *w*', which continues at a step into the groove (17), and being at the same time, that is, in contact with the other side part (3b) of the sealing ring, whilst the outer face (29) of the presealing ring lying in the conical region of the pointed end and the socket is inclined, the outer face (29) again exhibiting the same angle of inclination as the the flank (25) of the pointed end and the flank (10) of the socket;
and again
- the duct (11) running inside the pointed end (23) is connected by means of an opening in the base part (3a) of the sealing ring to the cavity (12), with the closable part (20) of the duct lying in the region of the inside (14) of the pipe.

3. A plug-and-socket connection as in Claim 1 or 2,
characterized in that the inner part (3d) of the sealing ring exhibits on the outside of it projections (18) in the form of teeth or like dovetails.

4. A plug-and-socket connection as in Claim 2 or 3,
characterized in that the presealing ring (26) has a sealing lip (28) which slopes in the direction of the activatable sealing ring (3).

5. A plug-and-socket connection as in one of the Claim 2 to 4,
characterized in that the presealing ring (26) exhibits a Shore A hardness of from 35° to 65°.

6. A plug-and-socket connection as in one of the Claims 2 to 5,
characterized in that the angle γ of the face (27) of contact between the two elastomeric bodies is about equal to the angle α of the flanks of the groove (4, 17).

7. A plug-and-socket connection as in one of the Claims 2 to 6,
characterized in that the groove depth *v*' ≦ half the groove depth *v*.

8. A plug-and-socket connection as in one of the Claims 2 to 7,
characterized in that the groove width *w*' is about equal to the groove width *w*.

9. A plug-and-socket connection as in one of the Claims 1 to 8,
characterized in that the flank angle α amounts to from 60° to 90°.

10. A plug-and-socket connection as in one of the Claims 1 to 9,
characterized in that in the conical region of the pointed end (2, 23) and socket (1) the angle β of the flanks (9, 10, 25) and of the outer face (29) of the presealing ring amounts to from 20° to 45°.

11. A plug-and-socket connection as in one of the Claims 1 to 10,
characterized in that the average wall thickness of the parts (3a, 3b, 3c, 3d) of the sealing ring amounts to from 2 o 5 mm.

12. A plug-and-socket connection as in one of the Claims 1 to 11,
characterized in that the activatable sealing ring (3) and the presealing ring (27) consist of ethylene-propylene-diene copolymer (EPDM) or a blend of styrene-butadiene rubber (SBR) and natural rubber (NR).

13. A plug-and-socket connection as in one of the Claims 1 to 12,
characterized in that the duct (11) is connected to the cavity (12) in the centre of the groove.

14. A plug-and-socket connection as in one of the Claims 1 to 13,
characterized in that connection of the duct is effected by means of a flange (19) which rests against the inside of the base part (3a) of the sealing ring.

15. A plug-and-socket connection as in one of the Claims 1 to 14,
characterized in that the closable part (13) of the duct is flush with the inner face (14) of the pipe.

16. A plug-and-socket connection as in one of the Claims 1 to 14,
characterized in that the closable part (20) of the duct lies in a bore (21) inside the pipe.

17. A plug-and-socket connection as in one of the Claims 1 to 16,
characterized in that the activatable sealing ring (3) has two ducts arranged at a certain distance apart round the ring (especially at half the circumference of the ring), one duct lying at the top of the ring.

## Revendications

1. Raccord à emboîtement, destine à être mis en oeuvre en particulier dans la construction d'égouts, se composant
- d'un manchon (1) en un matériau durci, à savoir en béton, en béton armé ou en résine synthétique,
- d'une extrémité mâle (2) d'un tuyau en tant que partie emboîtée et
- d'un anneau d'étanchéité (3) en matière élastomère, qui présente une cavité intérieure (12), l'anneau d'étanchéité (3) pouvant être mis dans un état activé, à partir d'un état non activé, par injection d'air ou d'un agent plastique ou élastique en permanence dans sa cavité, à travers au moins une conduite obturable (11), et un interstice résiduel (15), qui subsiste entre le manchon et l'extrémité mâle, pouvant être comblé et ainsi rendu étanche par la déformation de l'anneau d'étanchéité qui se produit alors;
- l'extrémité mâle (2) présentant un flanc incliné (9) dans la région située entre sa surface frontale (8) et l'anneau d'étanchéité activable (3), et le flanc opposé (10) du manchon s'étendant sous le même angle;
- l'extrémité mâle (2) présentant une gorge (4) de profondeur v et de largeur w, qui comporte des flancs (5, 6) et dans laquelle se trouve l'anneau d'étanchéité (3), lequel se compose d'une partie de base (3a) correspondant à la largeur w de la gorge, de deux parties latérales (3b) tangentes aux flancs (5, 6) de la gorge et d'une partie frontale déformable qui, à l'état non activé, se raccorde de chaque côté, par une partie de bord (3c) en arc de cercle, à la partie latérale (3b) adjacente, la hauteur maximale des parties de bord (3c) correspondant à la profondeur v de la gorge et ces parties de bord étant ainsi de niveau avec la surface (16) de l'extrémité mâle (2), tandis que la partie frontale s'étend en arc de cercle dans la gorge (4) à peu près jusqu'à la moitié de la profondeur v de celle-ci; et
- la conduite (11), qui s'étend à l'intérieur de l'extrémité mâle (2), étant en communication avec la cavité (12) de l'anneau d'étanchéité par une ouverture dans la partie de base (3a) de celui-ci, la partie obturable (13) de la conduite se trouvent au niveau de la surface intérieure (14) du tuyau.

2. Raccord à emboîtement, destiné à être mis en oeuvre en particulier dans la construction d'égouts, se composant
- d'un manchon (1) en un matériau durci, à savoir en béton, en béton armé ou en résine synthétique,
- d'une extrémité mâle (23) d'un tuyau en tant que partie emboîtée et
- d'un anneau d'étanchéité (3) en matière élastomère, qui présente une cavité intérieure (12), l'anneau d'étanchéité (3) pouvant être mis dans un état activé, à partir d'un état non activé, par injection d'air ou d'un agent plastique ou élastique en permanence dans sa cavité, à travers au moins une conduite obturable (11), et un interstice résiduel (15), qui subsiste entre le manchon et l'extrémité mâle, pouvant être comblé et ainsi rendu étanche par la déformation de l'anneau d'étanchéité qui se produit alors;
- l'extrémité mâle (23) présentant un flanc incliné (25) dans la région située entre sa surface frontale (8) et l'anneau d'étanchéité activable (3), et le flanc opposé (10) du manchon s'étendant sous le même angle;
- l'extrémité mâle (23) présentant une gorge (17) de profondeur v et de largeur w, qui comporte un flanc (5) et dans laquelle se trouve l'anneau d'étanchéité (3), lequel se compose d'une partie de base (3a) correspondant à la largeur w de la gorge, de deux parties latérales (3b) dont l'une est tangente au flanc (5) de la gorge, et d'une partie frontale déformable qui, à l'état non activé, se raccorde de chaque côté, par une partie de bord (3c) en arc de cercle, à la partie latérale (3b) adjacente, la hauteur maximale des parties de bord (3c) correspondant à la profondeur v de la gorge et ces parties de bord étant ainsi de niveau avec la surface (16) de l'extrémité mâle (23), tandis que la partie frontale s'étend en arc de cercle dans la gorge (17) à peu près jusqu'à la moitié de le profondeur v de celle-ci;
- un pré-anneau d'étanchéité (26), sous forme d'un corps plein en élastomère, se trouvant entre l'anneau d'étanchéité activable (3) et la surface frontale (8) de l'extrémité mâle, le pré-anneau d'étanchéité étant placé dans une gorge (24) de profondeur v' et de largeur w' qui se transforme en la gorge (17) en formant un gradin, et étant ainsi en même temps en contact avec l'autre partie latérale (3b) de l'anneau d'étanchéité activable, la surface extérieure (29) du pré-anneau d'étanchéité, qui se trouve dans la région conique de l'extrémité mâle et du manchon, étant inclinée, cette surface extérieure (29) présentant le même angle d'inclinaison que le flanc (25) de l'extrémité mâle ou que le flanc (10) du manchon; et
- la conduite (11), qui s'étend à l'intérieur de l'extrémité mâle (23), étant en communication avec la cavité (12) de l'anneau d'étanchéité par une ouverture dans la partie de base (3a) de celui-ci, la partie obturable (20) de la conduite se trouvant au niveau de la surface intérieure (14) du tuyau.

3. Raccord à emboîtement selon la revendication 1 ou 2, caractérisé en ce que la partie interne (3d) de l'anneau d'étanchéité présente, du côté extérieur, des saillies (18) en forme de dents ou de queues d'aronde.

4. Raccord à emboîtement selon la revendication 2 ou 3, caractérisé en ce que le pré-anneau d'étanchéité (26) comporte une lèvre d'étanchéité (28) qui est inclinée en direction de l'anneau d'étanchéité activable (3).

5. Raccord à emboîtement selon l'une quelconque des revendications 2 à 4, caractérisé en ce que le pré-anneau d'étanchéité (26) présente une dureté Shore A de 35° à 65°.

6. Raccord à emboîtement selon l'une quelconque des revendications 2 à 5, caractérisé en ce que l'angle γ de la surface de contact (27) entre les deux corps en élastomère est à peu près égal à l'angle α du flanc de la gorge (4, 17).

7. Raccord à emboîtement selon l'une quelconque des revendications 2 à 6, caractérisé en ce que la profondeur v' de la gorge est inférieure ou égale à la moitié de la profondeur v de l'autre gorge.

8. Raccord à emboîtement selon l'une quelconque des revendications 2 à 7, caractérisé en ce que la largeur w' de la gorge est à peu près égale à la largeur w de l'autre gorge.

9. Raccord à emboîtement selon l'une quelconque des revendications 1 à 8, caractérisé en ce que l'angle α des flancs a une valeur comprise entre 60° et 90°.

10. Raccord à emboîtement selon l'une quelconque des revendications 1 à 9, caractérisé en ce que, dans la région conique de l'extrémité mâle (2, 23) et du manchon (1), l'angle β des flancs (9, 10, 25) et de la surface extérieure (29) du pré-anneau d'étanchéité a une valeur comprise entre 20° et 45°.

11. Raccord à emboîtement selon l'une quelconque des revendications 1 à 10, caractérisé en ce que l'épaisseur moyenne de paroi des parties (3a, 3b, 3c, 3d) de l'anneau d'étanchéité est comprise entre 2 et 5 mm.

12. Raccord à emboîtement selon l'une quelconque des revendications 1 à 11, caractérisé en ce que l'anneau d'étanchéité activable (3) et le pré-anneau d'étanchéité (27) sont en un copolymère éthylène/propylène/diène (EPDM) ou en un mélange de caoutchouc styrène/butadiène (SBR) et de caoutchouc naturel (NR).

13. Raccord à emboîtement selon l'une quelconque des revendications 1 à 12, caractérisé en ce que la conduite (11) débouche dans la cavité (12) au milieu de la gorge.

14. Raccord à emboîtement selon l'une quelconque des revendications 1 à 13, caractérisé en ce que le raccordement de la conduite s'effectue au moyen d'une bride (19) qui est appliquée du côté intérieur sur la partie de base (3a) de l'anneau d'étanchéité.

15. Raccord à emboîtement selon l'une quelconque des revendications 1 à 14, caractérisé en ce que la partie obturable (13) de la conduite est à fleur de la surface intérieure (14) du tuyau.

16. Raccord à emboîtement selon l'une quelconque des revendications 1 à 14, caractérisé en ce que la partie obturable (20) de la conduite se trouve dans un creux (21) de la surface intérieure du tuyau.

17. Raccord à emboîtement selon l'une quelconque des revendications 1 à 16, caractérisé en ce que l'anneau d'étanchéité activable (3) comporte deux conduites qui sont disposées à une distance déterminée dans l'anneau (en particulier à la demi-circonférence de l'anneau), l'une des conduites se trouvant au point haut de l'anneau.
